(19) Europäisches Patentamt European Patent Office Office européen des brevets

(11) **EP 3 626 998 B1**

(12) **EUROPEAN PATENT SPECIFICATION**

(45) Date of publication and mention
of the grant of the patent:
**03.04.2024  Bulletin 2024/14**

(21) Application number: **18801396.5**

(22) Date of filing: **08.05.2018**

(51) International Patent Classification (IPC):
*F16G 1/28* (2006.01)   *D03D 1/00* (2006.01)
*D03D 13/00* (2006.01)   *F16G 1/14* (2006.01)
*D03D 15/58* (2021.01)   *F16G 1/10* (2006.01)
*F16G 1/16* (2006.01)   *D03D 15/283* (2021.01)

(52) Cooperative Patent Classification (CPC):
**F16G 1/10; D03D 1/0094; D03D 13/004;
D03D 13/008; D03D 15/283; D03D 15/58;
F16G 1/16; F16G 1/28;** D10B 2321/042;
D10B 2331/02

(86) International application number:
**PCT/JP2018/017799**

(87) International publication number:
**WO 2018/212018 (22.11.2018 Gazette 2018/47)**

(54) **RESIN BELT**

HARZBAND

COURROIE EN RÉSINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2017   JP 2017096630**

(43) Date of publication of application:
**25.03.2020   Bulletin 2020/13**

(73) Proprietors:
• **NOK Corporation
Minato-ku
Tokyo 105-8585 (JP)**
• **Toray Industries, Inc.
Tokyo 103-8666 (JP)**

(72) Inventors:
• **KANEKO Takeshi
Kitaibaraki-shi
Ibaraki 319-1535 (JP)**
• **USHIJIMA Shinnji
Kitaibaraki-shi
Ibaraki 319-1535 (JP)**
• **CAO Zhidan
Otsu
Shiga 520-2141 (JP)**
• **HARADA Masaru
Otsu
Shiga 520-2141 (JP)**
• **HATTORI Yasuhiro
Tokyo 102-8362 (JP)**

(74) Representative: **Prüfer & Partner mbB
Patentanwälte · Rechtsanwälte
Sohnckestraße 12
81479 München (DE)**

(56) References cited:
**EP-A2- 0 841 500        EP-A2- 1 813 835
WO-A1-2007/142318     JP-A- 2007 232 208
JP-A- 2011 117 605**

**Description**

Technical Field

The present invention relates to a resin belt, and particularly relates to a resin belt having improved abrasion resistance, low friction property, and formability.

Background Art

Conventional examples of a technique of preventing abrasion of a belt and a timing belt and the like that are used for conveyance systems such as production, conveyance, and assembly lines of a factory include (1) a technique of applying a lubricant such as an oil or a wax, (2) a technique of integrally molding a cloth made of a material having good low friction property such as nylon on a sliding surface (a teeth surface, a back face), and (3) a technique of using a low friction material as a material forming a belt body.

The technique of applying the lubricant in the above (1) provides an initial effect, but the effect decreases as the time elapses, so that the maintenance of periodically reapplying a lubricant is required, which is not preferable. Furthermore, the oil or the wax itself cannot be used in some cases depending on the usage purposes of a belt, and objects conveyed by the belt, which results in lack of versatility.

In the technique of stretching the nylon cloth in the above (2) and the technique of using the low friction material for the belt body in the above (3), an exceptionally large effect cannot be expected in many cases when the belt slides at a high speed and a high load.

Document List

Patent Literature

Patent Literature 1: Japanese Patent Application Publication No. 55-115643
Patent literature 2: EP 0 841 500 A2
Patent literature 3: EP 1 813 835 A2

Summary of Invention

Technical Problem

For this reason, a belt having excellent abrasion resistance and excellent low friction property when the belt slides at a high speed and a high load is desired to be developed.

Patent Literature 1 discloses a timing belt cover cloth made of a fluorine resin fiber and a thermoplastic synthetic resin fiber, and a belt using the cover cloth. As the cover cloth, a woven fabric is described, which is obtained by weaving a fluorine resin fiber used as a warp yarn in the lengthwise (longitudinal) direction of a belt body, and a thermoplastic synthetic resin fiber used as a weft yarn in a lateral (width) direction.

In recent years, a resin belt using a thermoplastic resin for a belt body is used since the resin belt is excellent in extrusion. The resin belt using the thermoplastic resin for a belt body part is excellent in extrusion, but followability (elongation properties) with respect to a tooth shape is required in the process of manufacture, so that elongation to be required in the lengthwise (longitudinal) direction is greater than or equal to a predetermined value.

However, in the belt described in Patent Literature 1, the fluorine resin fiber is used as the warp yarn in the longitudinal direction, so that the belt has elongation of about 20% at break in the longitudinal direction, and has poor elongation properties of about 10% in a practical region. This causes a problem in that the belt cannot be applied to extrusion.

Then, a resin belt is desired, which has excellent abrasion resistance, excellent low friction property when the belt slides at a high speed and a high load, and excellent formability that can be applied to extrusion.

It is an object of the present invention to provide a resin belt having excellent abrasion resistance, excellent low friction property when the belt slides at a high speed and a high load, and excellent formability that can be applied to extrusion.

Another object of the present invention will become apparent from the following description.

Solution to Problem

The objects are achieved by the invention as defined in claims 1-10.

Effects of Invention

According to the present invention, there can be provided a resin belt having excellent abrasion resistance, excellent low friction property when the belt slides at a high speed and a high load, and excellent formability that can be applied to extrusion.

Brief Description of Drawings

[Fig. 1] A perspective view of an essential part showing an example of a resin belt of the present invention.
[Fig. 2] (a) A view showing a mixed state of fibers of a plain weave fabric, and (b) a weave repeat diagram of a plain weave fabric for illustrating the exposure percentage of a fluorine resin fiber.
[Fig. 3] A graph of a tensile elongation of a cloth in a warp direction.
[Fig. 4] A view for illustrating a device used for an abrasion-resistant confirmation test.
[Fig. 5] A view for illustrating a device used for an abrasion-resistant confirmation test.
[Fig. 6] A view for representing the results of an abrasion-resistant confirmation test.

Description of Embodiments

Hereinafter, an embodiment of the present invention will be described with reference to the drawings.

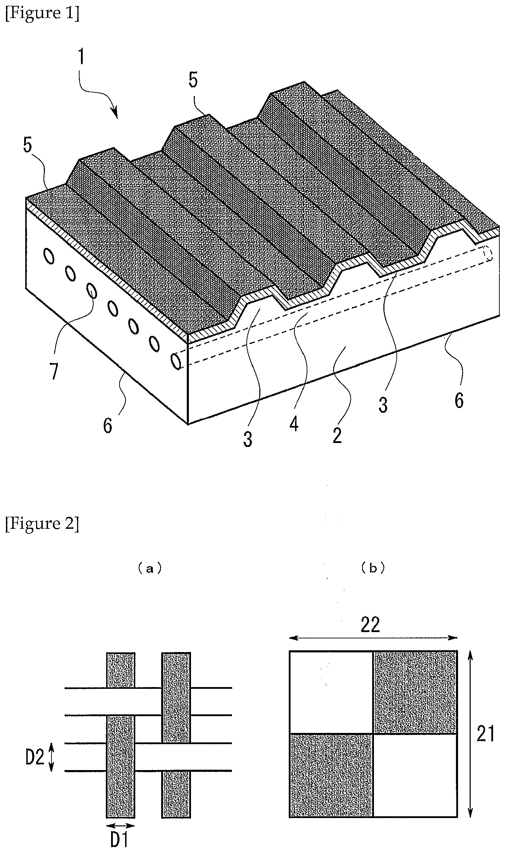

Fig. 1 is a perspective view of an essential part showing an example of a resin belt of the present invention.
In Fig. 1, a resin belt 1 includes teeth 3 provided on the side of the running surface of a belt body 2. Tooth bottoms 4 are formed on each of both sides of the teeth 3. A cloth 5 is provided on the surfaces of the teeth 3 and tooth bottoms 4 such that the surfaces thereof are covered with the cloth 5.
The belt body 2 is not particularly limited as long as it is an industrial belt used as a timing belt in production, conveyance, and assembly lines and the like, and for example, a flexural belt and a joint belt and the like can be used.
The teeth 3 and the tooth bottom 4 are alternately formed, and are configured to mesh with a toothed pulley along a longitudinal direction on the side of a running surface. The teeth 3 and the tooth bottom 4 mesh with teeth of the pulley to provide transmission, whereby exact synchronous transmission can be provided as in a chain or a gear.
Each of teeth 3 has a trapezoidal shape in cross section and an arc shape in cross section, for example, but the shape of the teeth 3 is not necessarily limited thereto.
The teeth 3 having a trapezoidal shape in cross section may be of, for example, an MXL type, XL type, L type, H type, or XH type described in JIS K6372, JIS K6373, ISO 5296-1, or ISO 5296-2, or a T2.5 type, T5 type, T10 type, or T20 type described in DIN7721. Alternatively, the teeth 3 may have an AT type special trapezoidal shape.
The teeth 3 having an arc shape in cross section may be of an H type, an S type, or a P type described in JIS B1857-1 and ISO 13050, for example. Alternatively, the teeth 3 may have an MA type arc shape.
An interval (a distance between the center of one of teeth and the center of one of teeth adjacent thereto) between the teeth 3, 3 ... adjacent to each other in the longitudinal direction is not limited, and it is, for example, about 5 to 30 mm.
It is preferable that a portion including a back face part (outer peripheral surface) 6 and the plurality of teeth 3 on the side of the running surface in the belt body 2 is integrally formed by extrusion.
The belt body 2 including the teeth 3 and the tooth bottom 4 is made of a thermoplastic resin. The thermoplastic resin is not particularly limited, and for example, a diene rubber, an olefin rubber, an acrylic rubber, a fluorine rubber, a silicone rubber, and a urethane rubber and the like can be illustrated. A material forming the belt body 2 can be appropriately selected depending on use conditions, but among these, polyurethane can be preferably used from the viewpoint of simultaneously achieving abrasion resistance, and formability.
Core wires 7 can be buried below the teeth of the belt body 2. As the core wire 7, fine wires made of metallic materials such as a steel wire and stainless steel wire, and fine wires made of fiber materials such as an aramid fiber, a glass fiber, a carbon fiber, a polyamide fiber, a polyester fiber, or a PBO (polyparaphenylene benzoxazole) fiber can be used, and these fibers may be used singly or in combinations of two or more. As the core wire 7, a twisted wire and the like can also be used, which is prepared by twisting a material obtained by combining any of the fine wires made of metallic materials and the fine wires made of fiber materials. The number of the core wires 7 to be buried and a method for burying the core wires 7 are not particularly limited.

The running surface (surface meshing with the pulley) of the belt body 2 is covered with the cloth 5. As shown in Fig. 2, in the cloth 5, a thermoplastic synthetic resin fiber is used for a warp yarn 5A, and a fluorine fiber is used for a weft yarn 5B.

That is, in the present embodiment, a low-abrasive cloth (low μ cloth) is obtained, which is formed by weaving a thermoplastic synthetic resin fiber used as a warp yarn in a longitudinal direction (lengthwise direction), and a fluorine resin fiber used as a weft yarn in a width direction (lateral direction).

The present invention is characterized in that, when the teeth 3 are covered with the cloth 5, the percentage of the fluorine resin fiber exposed on a side of a cloth surface (a side of a sliding surface with the pulley) in the cloth 5 is 50% or more per unit area, and the percentage of the fluorine resin fiber exposed on a side of a bonded surface with the teeth 3 (a side of an adhesion surface with the teeth surface) is 50% or less per unit area.

This makes it possible to secure sufficient followability (elongation properties) with respect to the shape of the teeth on the side of the bonded surface with the teeth, and improve abrasion resistance and low friction property.

When the percentage of the fluorine resin fiber exposed on the side of the cloth surface (the side of the sliding surface with the pulley) is less than 50% per unit area, abrasion resistance and low friction property are poor. Abnormal noise is apt to occur when the belt slides with the pulley.

When the percentage of the fluorine resin fiber exposed on the side of the bonded surface with the teeth 3 (the side of the adhesion surface with the teeth surface) exceeds 50% per unit area, adhesiveness with the belt body is poor, so that peeling occurs between the resin of the belt body and the cloth while the belt is operated.

In the present invention, the percentage of the fluorine resin fiber to be exposed means the percentage of an area of a portion in which the fluorine resin fiber floats in the surface. The portion is shown by a white cell in the weave repeat diagram of the cloth. Here, the weave repeat of a woven fabric means a minimum repetition unit forming the woven fabric. In the weave repeat diagram, a place in which a warp yarn floats in the surface is represented by a crepe pattern, and a place in which a weft yarn floats in the surface is represented by a white cell.

For example, in the case of a plain weave fabric, the weave repeat diagram is expressed by two warp yarns and two weft yarns as shown in Fig. 2(b). As shown in Fig. 2(a), when the projected length of diameters of warp and weft yarns are respectively taken as D1 and D2 in an actual plain weave fabric, a clearance is present between the yarns. When the cloth slides, a resin component forming the yarn is made into a coating by a frictional force and frictional heat to fill the clearance between the yarns with the coating. The percentage of the area of a portion in which the fluorine resin fiber floats in the surface in the weave repeat diagram shown in Fig. 2(b) is taken as an exposure percentage.

When the yarn densities of the warp and weft yarns are respectively taken as n1 (warp yarns/inch (2.54 cm)) and n2 (weft yarns/inch (2.54 cm)) in the weave repeat diagram of Fig. 2(b), lengths 21 and 22 of the weave repeat diagram of the woven fabric in lengthwise (warp) and lateral (weft) directions are respectively set to $(2.54 \times 2)/n2$ (cm) and $(2.54 \times 2)/n1$ (cm). The overall area S of the weave repeat diagram of the woven fabric is

$$S \ (cm^2) = \{(2.54 \times 2)/n2\} \times \{(2.54 \times 2)/n1\}$$

$$= 4 \times \{(2.54/n2) \times (2.54/n1)\}.$$

As previously described, the projected length of diameters of the warp and weft yarns forming the woven fabric are respectively D1 and D2, and the clearance is present between the yarns. Assuming that the sliding makes the resin forming each fiber into a coating to equally fill the clearance between the yarns with the coating, areas S1 and S2 of the warp and weft yarns exposed in the surface of the cloth respectively correspond to an area of a crepe pattern portion and an area of a white portion in Fig. 2(b). That is, the areas S1 and S2 are as follows.

$$S1 = 2 \times \{(2.54/n2) \times (2.54/n1)\}$$

$$S2 = 2 \times \{(2.54/n2) \times (2.54/n1)\}$$

Since the projected area of the weave repeat diagram of the woven fabric is S, the percentage P (%) of the fluorine resin fiber exposed in the surface of the cloth when the fluorine resin fiber is used only for the weft yarn is as follows.

$$P \ (\%) = (S2/S) \times 100$$

$$= 50\%$$

The percentage of the fluorine resin fiber exposed in the surface of the cloth can be adjusted by changing the yarn densities and cloth constructions of the fluorine resin fiber and thermoplastic resin fiber.

The percentage of the fluorine resin fiber according to the present invention is not affected by the density of the yarns forming the woven fabric. However, for example, as the fineness of the forming yarns is greater, the thickness of the woven fabric is greater, and the thickness of a coating formed during sliding is greater, whereby the durability is further improved. Meanwhile, if the fineness of the yarns is deceased, the cloth is likely to be elongated by a small tensile force. The fineness of the fibers forming the woven fabric can individually designed in consideration of the properties.

The thermoplastic synthetic resin fiber is not particularly limited, and polyolefin fibers composed of polyethylene and polypropylene and the like, polyester fibers composed of PET and the like, and polyamide fibers composed of nylon and the like can be exemplified. Among these, nylon can be preferably used from the viewpoints of fatigue resistance, tensile strength, and elasticity and the like.

The cloth obtained by weaving the thermoplastic synthetic resin fiber obtained by the method preferably has a tensile elongation of 20% or more and 60% or less in a warp direction. The tensile elongation of the cloth in the warp direction according to the present invention means a degree of elongation (%) of the cloth in the warp direction until a load of 5 N/3 cm is applied in the warp direction when the cloth is elongated in the warp direction under conditions of a sample width of 3 cm, a distance between chucks of 150 mm, and a tensile speed of 200 mm/min based on JIS 1096 method (2010), and is taken as an average value of values obtained by measuring five samples extracted from different places of the cloth. This is because the cloth is elongated to the length of the outline (ridge line) of the teeth 3 when the teeth surface of the teeth 3 is covered with the cloth, so that an elongation rate required therefor is achieved.

The required elongation rate is, for example, about 20 to 45% in the case of the above-mentioned trapezoidal shape, and about 40 to 55% in the case of the above-mentioned arc shape. Therefore, the cloth preferably has a tensile elongation of 20% or more and 60% or less in the warp direction. Meanwhile, if the tensile elongation in the warp direction exceeds 60%, the cloth is excessively elongated when the teeth is covered with the cloth. This causes problems that the belt resin oozes out on the front side of the cloth to cause deteriorated low friction property and the yarn fraying of the cloth is apt to occur.

Therefore, the tensile elongation of the cloth in the warp direction is preferably within the above range.

As the fluorine resin fiber, any of a trifluoride resin, a tetrafluoride resin, and a hexafluoride resin may be used, and from the viewpoints of abrasion resistance, heat resistance, and chemical resistance and the like, a tetrafluoroethylene resin is preferable.

Examples of the tetrafluoroethylene resin include a tetrafluoroethylene polymer, or a copolymer of tetrafluoroethylene and another monomer. Specific examples thereof include polytetrafluoroethylene (PTFE), a tetrafluoroethylene-hexafluoropropylene copolymer (FEP), a tetrafluoroethylene-perfluoroalkoxy group copolymer (PFA), and a tetrafluoroethylene-olefin copolymer (ETFE). These may be used alone or in a mixture of two or more.

In particular, polytetrafluoroethylene (PTFE) can be preferably used. However, a mixture of PTFE with polyurethane is excluded.

The fiber forms of the thermoplastic synthetic resin fiber and fluorine resin fiber are not particularly limited. The fiber forms may be any of a filament yarn or a spun yarn, may be a twisted yarn of fibers having an independent composition, or may be a mixed yarn or a blended yarn. The average fiber diameter of each fiber is not also particularly limited.

The weave structure of the cloth is not particularly limited as long as the percentage of the fluorine resin fiber exposed in each surface can be set as described above, and can be selected from, for example, plain weave, twill weave (twill), sateen weave (satin weave, satin), and change structures thereof.

[Formation Method]

A method for manufacturing a resin belt of the present invention is not particularly limited. For example, by stacking a cloth 5, core wires 7, and a thermoplastic resin forming a belt body 2 in order on a molding die, and vulcanizing the resin under moist heat at 150°C or higher under increased pressure, the resin belt can be formed.

In the above description, one aspect in which the teeth of the belt body is covered with the cloth is described, but the present invention is not limited thereto. For example, the back face part and the teeth may be covered with the cloth.

According to the present invention, there can be provided the resin belt having excellent abrasion resistance, excellent low friction property when the belt slides at a high speed and a high load, and excellent formability that can be applied to extrusion.

Furthermore, the present invention provides good low friction property when the belt slides with a mating part with the pulley and a guide rail even in a high load state when the belt is used for driving and conveying to provide an excellent abrasion resistance specification, and can suppress the occurrence of abnormal noise.

Conventionally, a nylon cloth is generally used for the back face part of the belt (the surface opposite to the teeth), but in the resin belt of the present invention, the same cloth as that of the running surface (teeth surface) can be used for the back face part (the surface opposite to the teeth). This makes it possible to expect improvement in low friction property and abrasion resistance when a conveyed object is accumulated in the back face part of the belt in a conveying application. From the above, the durability of the belt in use is improved, whereby maintenance costs can be reduced, and the belt can be expected to be used in various applications.

Examples

Hereinafter, Examples of the present invention will be described, but the present invention is not limited thereto.

(Example 1)

1. Production of Belt Body

A belt body including a back face part and teeth were formed by using a T5 type trapezoidal shape described in DIN7721. The belt body is made of polyurethane. In the belt body, a plurality of teeth are formed at predetermined intervals along a longitudinal direction on a running surface.

2. Production of Cloth

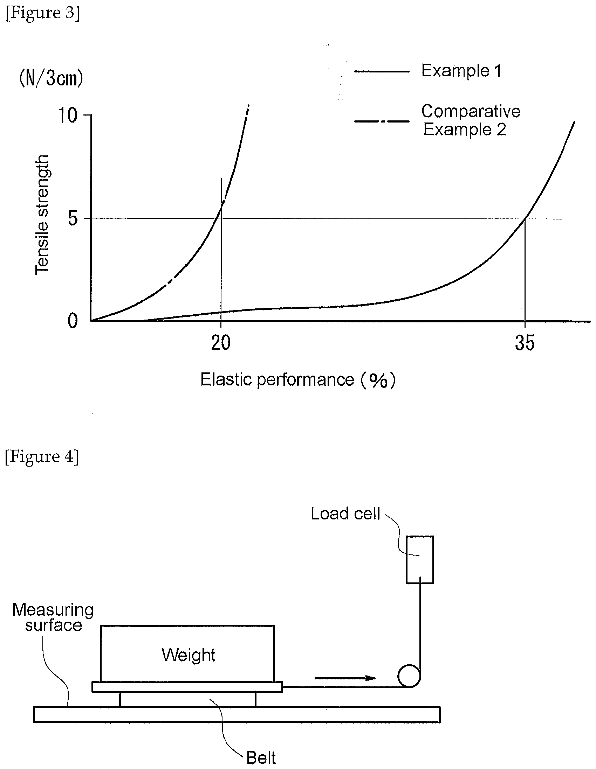

A wooly yarn was provided by a known technique using a 6,6 nylon fiber of 78 dtex (diameter: 91 $\mu$m) as a thermoplastic synthetic resin fiber. A polytetrafluoroethylene (PTFE) fiber of 440 dtex (diameter: 156 $\mu$m) was used as a fluorine resin fiber.
A cloth was obtained by weaving the wooly yarn of 6,6 nylon used as a warp yarn and the PTFE fiber used as a weft yarn so as to provide a 2/1 twill structure having a warp yarn density of 86 warp yarns/inch (2.54 cm) and a weft yarn density of 66 weft yarns/inch (2.54 cm)). The percentage of the PTFE fiber exposed in one surface of the obtained cloth was 33.3% per unit area, and the percentage of the PTFE fiber exposed in another surface was 66.7% per unit area. A tensile elongation in a warp direction was 35% (see Fig. 3).

3. Covering of Belt Body with Cloth

A teeth surface of the teeth of the belt body was covered with the cloth obtained in the above 2. The belt body was covered with the cloth such that a surface of cloth in which the exposure percentage of PTFE was 33.3% per unit area was bonded to the belt body. The obtained belt was taken as a belt 1.

(Comparative Example 1)

A belt 2 was obtained in the same manner as in Example 1 except that the production of a cloth and the covering of a belt body with the cloth were omitted in Example 1.

(Comparative Example 2)

A belt 3 was obtained in the same manner as in Example 1 except that, in Example 1, raw yarns of 6,6 nylon in a cloth were used as a warp yarn and a weft yarn, and a warp yarn density of 110 warp yarns/inch (2.54 cm) and a weft yarn density of 110 weft yarns/inch were set.
When the tensile elongation of the cloth measured in a warp direction was less than 20% (see Fig. 3).

4. Tests

(1) Measurement Test of Dynamic Friction Coefficient

The belts 1 to 3 were subjected to a friction coefficient measurement test.
In the tests, a tensile test machine shown in Fig. 4 was used.

Measurement Conditions

Load: 2 kgf

Tensile speed: 100 mm/min
Measuring surface: teeth or cloth surface
Mating member: SUS
State of measuring surface: drying

Under the above conditions, a frictional force was measured, and a dynamic friction coefficient was obtained from the measured frictional force.

Three samples for each of the belts 1 to 3 were subjected to the test to obtain the average value of the dynamic friction coefficients.

The ratio of the dynamic friction coefficients (average values) of the belts 1 and 3 was calculated and evaluated on the basis of the dynamic friction coefficient (average value) of the belt 2. The results are shown in Table 1.

(2) Abrasion-Resistant Confirmation Test

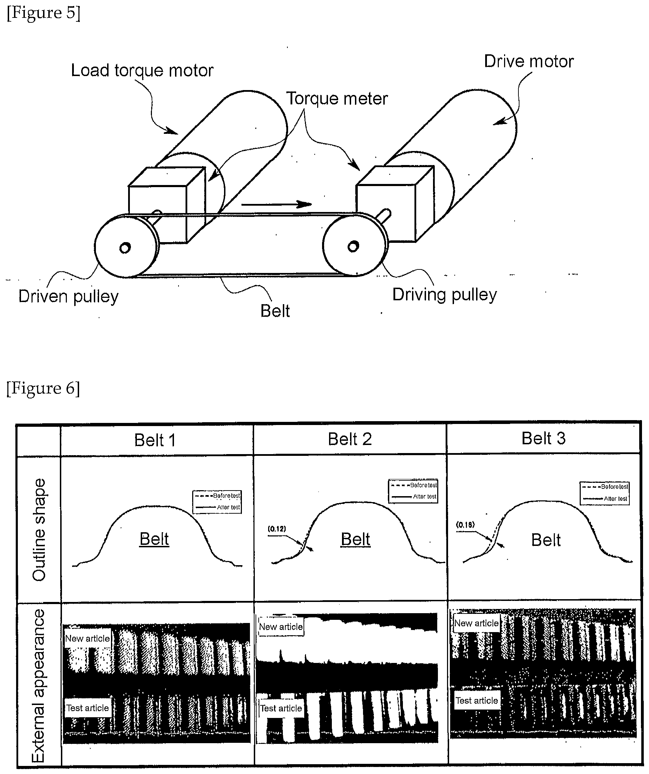

The belts 1 to 3 were subjected to an abrasion-resistant confirmation test using a biaxial load testing machine shown in Fig. 5.

Driving Pulley and Driven Pulley

Number of teeth: 34 teeth (dp 86.58 mm)
Material: Aluminum (A2017)
Number of rotations of driving pulley: 1000 rpm
Load torque: 32 Nm

The driving pulley was driven by a drive motor under the above-mentioned conditions.

(2-1)
The abrasion state of the teeth or cloth surface, and the presence or absence of the occurrence of a wear debris were observed. The results are shown in Fig. 5.

(2-2)
The outline shapes of the teeth or cloth surface before and after the test were measured by using an outline-shape-measuring machine. The measured outlines were superposed, to measure an amount of abrasion. The results are shown in Fig. 6.

(2-3)
In the test, the presence or absence of abnormal noise occurring due to mating and sliding with a pulley teeth was confirmed. The results are shown in Table 2.

[Table 1]

| Belt No. | Dynamic friction coefficient ratio | Remarks |
|---|---|---|
| Belt 1 | 0.25 | Present invention |
| Belt 2 | 1 (standard) | Com parison |
| Belt 3 | 0.33 | Comparison |

[Table 2]

| Belt No. | Results | Remarks |
|---|---|---|
| Belt 1 | Abnormal noise was not confirmed to be occur 672 hours (28 days) after the initiation of running. | Present invention |
| Belt 2 | Abnormal noise was confirmed to be occur 12 hours after the initiation of running. | Comparison |
| Belt 3 | Abnormal noise was confirmed to be occur 48 hours after the initiation of running. | Comparison |

<Evaluation>

From Table 1, when the dynamic friction coefficient of the belt 2 having a running surface made of polyurethane as a low abrasion material is taken as 1 as a standard, the ratio of the dynamic friction coefficient of the belt 3 having a running surface covered with the cloth made of nylon to that of the belt 2 is decreased to 0.33.

Meanwhile, the belt 1 of the present invention can be said to have a lower dynamic friction coefficient ratio, whereby the belt 1 has most excellent abrasion resistance.

From Fig. 6 and Table 2, in the belt 2, a urethane wear debris as the material of the belt body occurred 12 hours after the initiation of running. Then, after the test for 48 hours, an abrasion shape of about 0.12 mm was observed in the teeth surface.

In the belt 3, a cloth wear debris made of nylon occurred 24 hours after the initiation of running. Then, the cloth of a teeth surface meshed part was abraded after about 48 hours, and the polyurethane of the belt body was exposed. After the running test for 96 hours, an abrasion shape of about 0.18 mm was observed in the teeth surface.

Meanwhile, even if the belt 1 of the present invention was subjected to an abrasion-resistant confirmation test for 672 hours, an abrasion shape was not observed. This result also shows that the belt of the present invention has excellent abrasion resistance.

From the results of Table 2, the occurrence of abnormal noise is confirmed as the results of the abraded belts 2 and 3, but the occurrence of abnormal noise is not also confirmed in the belt 1.

List of Reference Signs

1 resin belt
2 belt body
3 teeth
4 tooth bottom
5 cloth
6 back face part
7 core wire
21 length of woven fabric in lengthwise (warp) direction in weave repeat diagram
22 length of woven fabric in lateral (weft) direction in weave repeat diagram
D1 diameter of warp yarn
D2 diameter of weft yarn

**Claims**

1. A resin belt (1) comprising:

   a plurality of teeth (3) disposed at predetermined intervals along a longitudinal direction of the belt (1) on a running surface of a belt body (2) made of a thermoplastic resin; and
   a cloth (5) covering the teeth (3),
   **characterized in that**:

      the cloth (5) is a woven cloth obtained by weaving a thermoplastic synthetic resin fiber used as a warp yarn (5A) in the longitudinal direction of the belt (1) and a fluorine resin fiber used as a weft yarn (5B) in a width direction of the belt (1); and **characterized in that**
      a percentage of the fluorine resin fiber exposed on a side of a cloth surface of the teeth (3) is 50% or more per unit area, and a percentage of the fluorine resin fiber exposed on a side of a bonded surface with the belt body (2) is 50% or less per unit area;
      the belt body (2) is made of polyurethane; and
      the thermoplastic synthetic resin fiber is made of nylon and the fluorine resin fiber is made of tetrafluoroethylene-based resin.

2. The resin belt (1) according to claim 1 , **characterized in that** a tensile elongation of the cloth (5) in a warp direction is 20% or more and 60% or less.

3. The resin belt (1) according to any one of claims 1 to 2, **characterized in that** the belt body (2) and the cloth (5) are integrally formed with each other.

4. The resin belt (1) according to any one of claims 1 to 3, **characterized in that** the cloth (5) is integrally formed with a teeth surface part of an MXL type, XL type, L type, H type, or XH type of a trapezoidal-shaped belt described in JIS K6372, JIS K6373, ISO 5296-1, or ISO 5296-2, or
the cloth (5) is integrally formed with a teeth surface part of a T2.5 type, T5 type, T10 type, or T20 type of a trapezoidal-shaped belt described in DIN7721.

5. The resin belt (1) according to any one of claims 1 to 3, **characterized in that** the cloth (5) is integrally formed with an AT type teeth surface part of a special trapezoidal-shaped belt.

6. The resin belt (1) according to any one of claims 1 to 3, **characterized in that** the cloth (5) is integrally formed with a teeth surface part of an H type, S type, or P type of an arc-shaped belt described in JIS B1857-1 or ISO 13050.

7. The resin belt (1) according to any one of claims 1 to 3, **characterized in that** the cloth (5) is integrally formed with an MA type teeth surface part of an arc-shaped belt.

8. The resin belt according to any one of claims 1 to 7, **characterized in that** the cloth (5) is integrally formed with a back face part (6) of the belt (1).

9. The resin belt (1) according to any one of claims 1 to 7, **characterized in that** the cloth (5) is integrally formed with a back face part (6) and a teeth surface part of the belt (1).

10. The resin belt (1) according to any one of claims 1 to 9, **characterized in that** the belt body (2) contains, as a core wire (7), at least one selected from a steel wire, a stainless steel wire, an aramid fiber, a glass fiber, a carbon fiber, a nylon fiber, a polyester fiber, or a polyparaphenylene benzoxazole (PBO) fiber.

**Patentansprüche**

1. Harzriemen (1), umfassend:

   eine Mehrzahl von Zähnen (3), die in vorbestimmten Abständen entlang einer Längsrichtung des Riemens (1) auf einer Lauffläche eines aus einem thermoplastischen Harz hergestellten Riemenkörpers (2) angeordnet sind, und
   ein Gewebe (5), das die Zähne (3) bedeckt,
   **dadurch gekennzeichnet, dass**:

   das Gewebe (5) ein gewebtes Gewebe ist, das durch Weben einer thermoplastischen Kunstharzfaser, die als ein Kettfaden (5A) in der Längsrichtung des Riemens (1) verwendet wird, und einer Fluorharzfaser, die als ein Schussfaden (5B) in einer Breitenrichtung des Riemens (1) verwendet wird, erhalten wird, und
   ein Prozentsatz der Fluorharzfaser, die auf einer Seite einer Gewebeoberfläche der Zähne (3) freiliegt, 50 % oder mehr pro Flächeneinheit beträgt und ein Prozentsatz der Fluorharzfaser, die auf einer Seite einer mit dem Riemenkörper (2) verbundenen Oberfläche freiliegt, 50 % oder weniger pro Flächeneinheit beträgt;
   der Riemenkörper (2) aus Polyurethan hergestellt ist und
   die thermoplastische Kunstharzfaser aus Nylon hergestellt ist und die Fluorharzfaser aus Harz auf Tetrafluorethylenbasis hergestellt ist.

2. Harzriemen (1) nach Anspruch 1, **dadurch gekennzeichnet, dass** eine Zugdehnung des Gewebes (5) in einer Kettrichtung 20 % oder mehr und 60 % oder weniger beträgt.

3. Harzriemen (1) nach einem der Ansprüche 1 bis 2, **dadurch gekennzeichnet, dass** der Riemenkörper (2) und das Gewebe (5) einstückig miteinander ausgebildet sind.

4. Harzriemen (1) nach einem der Ansprüche 1 bis 3, **dadurch gekennzeichnet, dass** das Gewebe (5) einstückig mit einem Zahnoberflächenteil eines MXL-Typs, XL-Typs, L-Typs, H-Typs oder XH-Typs eines trapezförmigen Riemens ausgebildet ist, der in JIS K6372, JIS K6373, ISO 5296-1 oder ISO 5296-2 beschrieben ist, oder
   das Gewebe (5) einstückig mit einem Zahnoberflächenteil eines T2.5-Typs, T5-Typs, T10-Typs oder T20-Typs eines trapezförmigen Riemens ausgebildet ist, der in DIN7721 beschrieben ist.

5. Harzriemen (1) nach einem der Ansprüche 1 bis 3, **dadurch gekennzeichnet, dass** das Gewebe (5) einstückig mit einem Zahnoberflächenteil eines AT-Typs eines speziellen trapezförmigen Riemens ausgebildet ist.

6.  Harzriemen (1) nach einem der Ansprüche 1 bis 3, **dadurch gekennzeichnet, dass** das Gewebe (5) einstückig mit einem Zahnoberflächenteil eines H-Typs, S-Typs oder P-Typs eines bogenförmigen Riemens ausgebildet ist, der in JIS B1857-1 oder ISO 13050 beschrieben ist.

7.  Harzriemen (1) nach einem der Ansprüche 1 bis 3, **dadurch gekennzeichnet, dass** das Gewebe (5) einstückig mit einem Zahnoberflächenteil eines MA-Typs eines bogenförmigen Riemens ausgebildet ist.

8.  Harzriemen nach einem der Ansprüche 1 bis 7, **dadurch gekennzeichnet, dass** das Gewebe (5) einstückig mit einem Rückflächenteil (6) des Riemens (1) ausgebildet ist.

9.  Harzriemen (1) nach einem der Ansprüche 1 bis 7, **dadurch gekennzeichnet, dass** das Gewebe (5) einstückig mit einem Rückflächenteil (6) und einem Zahnoberflächenteil des Riemens (1) ausgebildet ist.

10. Harzriemen (1) nach einem der Ansprüche 1 bis 9, **dadurch gekennzeichnet, dass** der Riemenkörper (2) als Kerndraht (7) mindestens eines enthält, das aus einem Stahldraht, einem Edelstahldraht, einer Aramidfaser, einer Glasfaser, einer Kohlenstofffaser, einer Nylonfaser, einer Polyesterfaser oder einer Polyparaphenylenbenzoxazol(PBO)-Faser ausgewählt ist.

## Revendications

1.  Une courroie en résine (1) comprenant :

    une pluralité de dents (3) disposées à des intervalles prédéterminés le long d'une direction longitudinale de la courroie (1) sur une surface de roulement d'un corps de courroie (2) fait d'une résine thermoplastique ; et
    une toile (5) recouvrant les dents (3),
    **caractérisée en ce que** :

    la toile (5) est une toile tissée obtenue en tissant une fibre de résine synthétique thermoplastique utilisée comme fil de chaîne (5A) dans la direction longitudinale de la courroie (1) et une fibre de résine fluorée utilisée comme fil de trame (5B) dans une direction de largeur de la courroie (1) ; et **caractérisée en ce que** un pourcentage de la fibre de résine fluorée exposée sur un côté d'une surface de toile des dents (3) est de 50 % ou plus par unité d'aire, et un pourcentage de la fibre de résine fluorée exposée sur un côté d'une surface liée avec le corps de courroie (2) est de 50 % ou moins par unité d'aire ;
    le corps de courroie (2) est fait de polyuréthane ; et
    la fibre de résine synthétique thermoplastique est faite de nylon et la fibre de résine fluorée est faite de résine à base de tétrafluoroéthylène.

2.  La courroie en résine (1) selon la revendication 1, **caractérisée en ce qu'**un allongement à la traction de la toile (5) dans une direction de chaîne est de 20 % ou plus et de 60 % ou moins.

3.  La courroie en résine (1) selon l'une quelconque des revendications 1 à 2, **caractérisée en ce que** le corps de courroie (2) et la toile (5) sont intégralement formés l'un avec l'autre.

4.  La courroie en résine (1) selon l'une quelconque des revendications 1 à 3, **caractérisée en ce que** la toile (5) est intégralement formée avec une partie de surface de dents d'un type MXL, d'un type XL, d'un type L, d'un type H, ou d'un type XH d'une courroie de forme trapézoïdale décrite dans JIS K6372, JIS K6373, ISO 5296-1, ou ISO 5296-2, ou
    la toile (5) est intégralement formée avec une partie de surface de dents d'un type T2.5, d'un type T5, d'un type T10, ou d'un type T20 d'une courroie de forme trapézoïdale décrite dans DIN7721.

5.  La courroie en résine (1) selon l'une quelconque des revendications 1 à 3, **caractérisée en ce que** la toile (5) est intégralement formée avec une partie de surface de dents de type AT d'une courroie de forme trapézoïdale spéciale.

6.  La courroie en résine (1) selon l'une quelconque des revendications 1 à 3, **caractérisée en ce que** la toile (5) est intégralement formée avec une partie de surface de dents d'un type H, d'un type S, ou d'un type P d'une courroie de forme arquée décrite dans JIS B1857-1 ou ISO 13050.

**7.** La courroie en résine (1) selon l'une quelconque des revendications 1 à 3, **caractérisée en ce que** la toile (5) est intégralement formée avec une partie de surface de dents de type MA d'une courroie de forme arquée.

**8.** La courroie en résine selon l'une quelconque des revendications 1 à 7, **caractérisée en ce que** la toile (5) est intégralement formée avec une partie de face arrière (6) de la courroie (1).

**9.** La courroie en résine (1) selon l'une quelconque des revendications 1 à 7, **caractérisée en ce que** la toile (5) est intégralement formée avec une partie de face arrière (6) et une partie de surface de dents de la courroie (1).

**10.** La courroie en résine (1) selon l'une quelconque des revendications 1 à 9, **caractérisée en ce que** le corps de courroie (2) contient, en tant que fil d'âme (7), au moins un élément choisi parmi un fil d'acier, un fil d'acier inoxydable, une fibre d'aramide, une fibre de verre, une fibre de carbone, une fibre de nylon, une fibre de polyester, ou une fibre de polyparaphénylène benzoxazole (PBO).

[Figure 1]

[Figure 2]

（a）

（b）

[Figure 3]

[Figure 4]

[Figure 5]

[Figure 6]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55115643 A
- EP 0841500 A2
- EP 1813835 A2